Europäisches Patentamt

(19) European Patent Office

Office européen des brevets

(11) **EP 0 607 093 B1**

## (12) EUROPEAN PATENT SPECIFICATION

(45) Date of publication and mention
of the grant of the patent:
**01.04.1998 Bulletin 1998/14**

(51) Int. Cl.$^6$: **B65G 47/90**, B65H 19/12,
B66C 1/42

(21) Application number: **94420001.3**

(22) Date of filing: **06.01.1994**

(54) **Device for gripping and transporting a cylinder placed horizontally on a support**

Vorrichtung zum Greifen und Transportieren eines auf einem Lagerbock horizontal angeordneten
Zylinders

Dispositif de préhension et de transport d'un cylindre posé horizontalement sur un support

(84) Designated Contracting States:
**DE FR GB NL**

(30) Priority: **13.01.1993 FR 9300431**

(43) Date of publication of application:
**20.07.1994 Bulletin 1994/29**

(73) Proprietors:
- **KODAK-PATHE**
**F-75594 Paris Cedex 12 (FR)**
Designated Contracting States:
**FR**
- **EASTMAN KODAK COMPANY**
**Rochester, New York 14650-2201 (US)**
Designated Contracting States:
**DE GB NL**

(72) Inventors:
- **Gaudillat, Jacques Fernand**
**F-71102 Chalon sur Saône Cédex (FR)**
- **Robin, Jacques**
**F-71102 Chalon sur Saône Cédex (FR)**
- **Vassos, Alain**
**F-71102 Chalon sur Saône Cédex (FR)**

(74) Representative:
**Buff, Michel et al**
**KODAK INDUSTRIE**
**Département Brevets - CRT**
**Zone Industrielle - B.P. 21**
**71102 Chalon sur Saône Cédex (FR)**

(56) References cited:
**DD-A-  99 344**          **DD-A-  153 338**
**DD-A-  246 282**         **DE-A- 3 825 673**
**US-A- 2 665 162**

**Description**

The present invention concerns a device for gripping and transporting a cylinder placed horizontally on a support. Such a device is, notably, particularly suitable for the gripping and transporting of reels of products in strip form such as, for example, photographic film, paper or cloth.

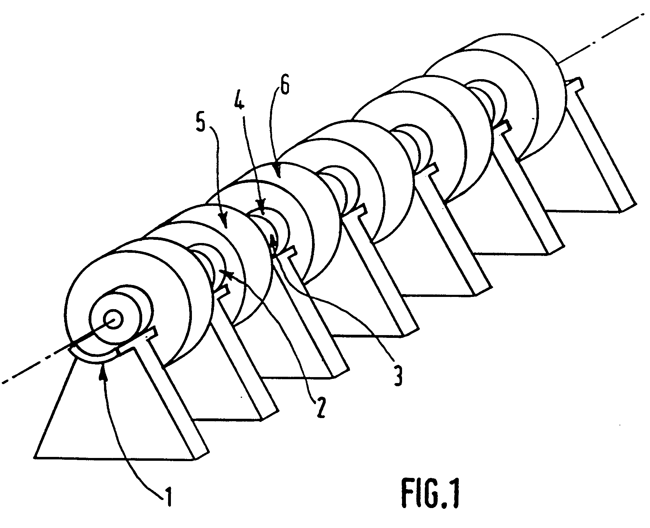

In the photographic industry, photographic film, after being cut to the desired format, is wound on a core which is hollow at its centre and which has a width greater than the width of the film, so that the said core projects at each end of the reel, so as to form two shoulders. In the 35 mm film industry, the reels thus formed may have a diameter of approximately 900 mm, the width of the shoulders at each end of the reel being of the order of 18 mm for a core whose diameter is of the order of 160 mm. These reels, before being taken away to other processing stations, are stored on racks of the type shown in Fig 1. Such racks consist of a line of cradles 1 separated by a distance substantially equal to the width of the film and each defining a surface in the form of an arc of a circle designed to receive the first shoulder 3 of a first reel 5 and the second shoulder 4 of a reel 6, adjacent to the first. The problem with such an arrangement lies in the gripping of the reels thus stored for the purpose of routeing them to the said subsequent processing stations. The complexity of such an operation being related to the fact that: 1) these reels are not accessible at their lower part because of their being supported on the said cradles, and 2) these reels have a large diameter compared with the space between two adjacent reels and the diameter of the shoulders, which makes it difficult to gain access to the said shoulders by means of a tool for the purpose of transporting the said reels, since the said tool should in no circumstances, because of the fragility of some products such as photographic films, come into contact with the strip product.

Traditionally, such reels are extracted from their support by means of a device comprising a pin at the end of a moving arm, which is inserted into the central hole provided in the core of the reel, the movement of the arm then enabling the reel to be extracted from its support. Such a technique has two main drawbacks. The first is related to the fact that, in the subsequent processing stations, the reel, in order to unwind it, has to be placed on a spindle designed to receive the hole provided in its core. With such a technique, this operation cannot be carried out directly because of the pin which partially blocks off the said hole. The reel must therefore be put down close to the spindle and then picked up again manually by an operator to be placed on the said spindle. This is obviously very onerous from the point of view of efficiency. The second drawback is related to the fact that it is sometimes desirable to take the reels from the rack in a random manner. This is the case in particular when it is desirable to sort the said reels, according to their diameter for example. However, such a technique prevents any reel other than those at the two ends of the rack from being gripped.

According to another technique, the reels are extracted from the rack by means of a device comprising two jaws articulated at a point which is brought approximately over the axis of the reel to be picked up. The jaws are opened, by means of a device of the double-acting jack type, so that their ends pass below the horizontal plane passing through the axis of the reel, and then closed so as to grip the said reel in order to be able to lift it. The problem posed by such a device relates to the fact that the axis of articulation of the said jaws, positioned above the axis of the reel, is disposed in such a way that the components of the weight of the reel and the friction force exert on the jaws a torque tending to separate the said jaws from each other, which, if the gripping force exerted by the said jaws is not sufficient, causes the reel to fall, with all the disastrous consequences for the product which may result from this. This is the case, for example, when the hydraulic or pneumatic circuit supplying the said jacks is cut off. In addition, there is a risk that the gripping force which has to be exerted by the jaws to lift the reel may irreversibly damage the core of the said reel.

Thus one of the objects of the present invention is to produce a device for gripping and transporting a cylinder placed horizontally on a support which does not have the drawbacks of the conventional devices mentioned above.

Other objects will be clear from the detailed description of the preferred embodiments of the device according to the present invention.

These objects are achieved by means of a device as in claim 1 for gripping and transporting a cylinder placed horizontally on a support, said device comprising:

a) a jaw;
b) a counter-jaw on which said jaw is mounted at a pivot axis P parallel to the axis of the cylinder and which is designed to cooperate with said jaw to grip said cylinder and extract it from said support in order to transport it;
c) means for providing the counter-jaw with a rotating approach movement enabling part of said counter-jaw to be brought into contact with the cylinder along at least one straight line A parallel to the axis of the cylinder and located on the same side of the axis of rotation of said counter-jaw with respect to the axis of said cylinder and for providing also the counter-jaw with a movement enabling the cylinder to be extracted from said support and to be transported;
d) means for providing the jaw with a pivoting movement about said pivot axis P in order to bring part of said jaw into contact with said cylinder along at least one straight line B, parallel to the axis of the cylinder, the position of said straight line B being such that it is located on the other side of said axis P with respect to the axis of the cylinder and the plane which it defines with the straight line A, when the cylinder is extracted from said support, cuts the vertical half plane starting from the axis of the cylinder and oriented downwards, outside the axis of the cylinder, said jaw and counter-jaw presenting a clearance j in their relative positioning;
said device being characterised in that:

said jaw has an extra length s at its end to absorb said clearance; and
the pivot axis P is disposed so that the angle α formed by the plane passing through the pivot axis P and said axis of the cylinder when the latter is resting on the support with the plane passing through the pivot axis P and said line B when the cylinder is lifted from the support is less than, or equal to the angle of friction of said jaw on said cylinder at said line B, said angle of friction being defined by its tangent which is the ratio between the force due to the weight of the cylinder and the friction force at line B, thus preventing any movement tending to move away from each other said straight lines A and B where the jaw and counter-jaw make contact with the cylinder.

In the following detailed description, reference will be made to the drawing in which:

- Fig 1 shows a rack supporting a plurality of reels of strip products for which the device according to the present invention is particularly suited;

- Fig 2 shows a sectional view of an embodiment of the device according to the present invention;

- Fig 3 shows a view in perspective of the device of Fig 2;

- Fig 4 illustrates diagrammatically an embodiment of the device according to the present invention.

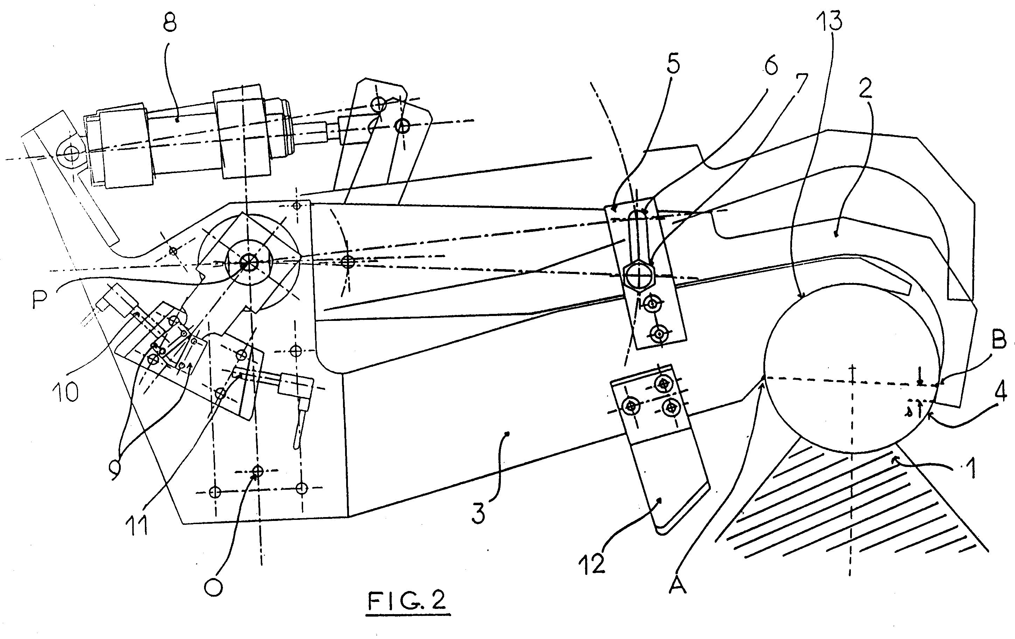

Fig 2, to which reference is now made, shows a sectional view of an embodiment of the device according to the present invention. The embodiment shown is suitable for picking up and transporting reels of the type with shoulders as discussed above and supported on a rack of the type shown in Fig 1. The reel to be picked up is disposed so that it rests horizontally at its shoulders (situated at each end of the reel) on supports 1 formed by at least two straight lines parallel to the axis of the cylindrical shoulders and spaced apart angularly with respect to the axis of the said shoulders. Advantageously, these supports 1 form a surface in the form of an arc of a circle. By way of example, this arc of a circle forms an angle of the order of 120° with respect to the axis of the cylinder. According to another embodiment, the cylinder to be picked up rests on a horizontal plane.

The device comprises principally a jaw 2 and a counter-jaw 3 on which the said jaw is mounted at a pivot axis P parallel to the axis of the cylinder 4 and designed to cooperate with the said jaw 2 to grip the cylinder 4 and extract it from the said support in order to transport it. In the diagrammatic representation in Fig 2, the jaw and all the items affected by the movement of the pivot about the point P are shown in two positions: a top position and a bottom position. The movement of the said jaw on the counter-jaw is limited both in the top position and bottom position by means of a piece 5 secured to the counter-jaw and provided with a hole 6 of elongate shape in which a screw 7 integral with the jaw moves. This piece 5 also makes it possible to guide the movement of the jaw 2 on the counter-jaw 3 so that there is no relative lateral movement between the jaw and counter-jaw. Advantageously, such a piece is disposed on each side of the jaw.

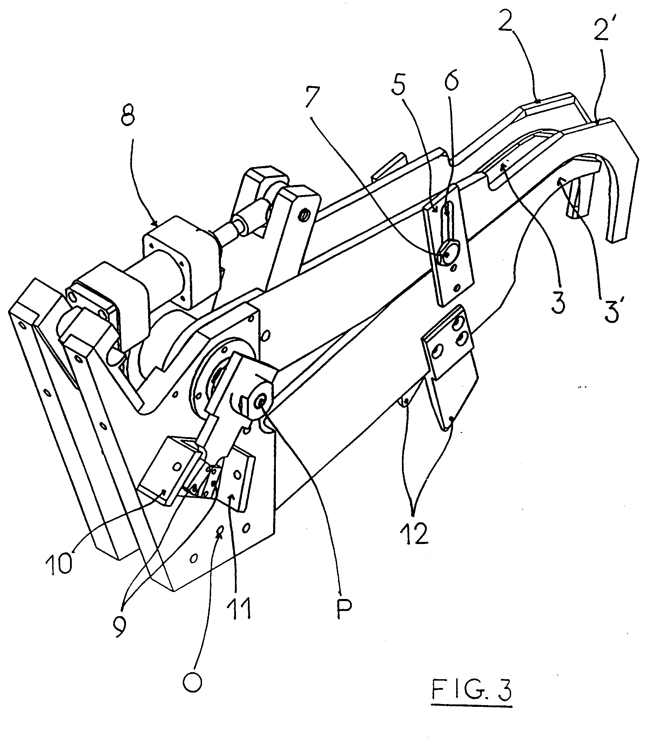

As is clearer in the representation in perspective in Fig 3, where the object to be raised is a reel of film with shoulders, the jaw and counter-jaw are divided into two substantially identical parts, separated (2, 2', 3, 3') by a distance corresponding approximately to the width of the film and secured to each other so that the reel is gripped by the jaw and counter-jaw at each of its two shoulders. According to another embodiment, each of the two parts of the jaw and/or of the counter-jaw are controlled independently of one another. It is obvious that such an arrangement is not necessary when the cylinder to be picked up is uniform over its entire length. The assembly thus produced, jaw/counter-jaw, is mounted, with respect to translational movement and/or rotational movement about an axis perpendicular to the axis of the cylinder, on a carriage (not shown) thus making it possible to move the device past the cylinder to be extracted and to cause the cylinder, once extracted from its support, to follow any path.

The device also comprises means (not shown) for conferring on the counter-jaw 3 an approach movement enabling part of the said counter-jaw to be brought into contact, to within manufacturing tolerances, with the cylinder at at least one straight line A, parallel to the axis of the cylinder, the position of the straight line A being such that, when the counter-jaw approaches the cylinder, there is no interference of matter between the said straight line A and the said cylinder. According to a preferred embodiment, the said approach movement of the counter-jaw is a pivoting movement about a pivot axis O, but it is obvious that any other approach movement may be envisaged. For example, the said approach movement may be a translational movement. In the case of an approach movement pivoting about the axis O, the condition relating to the absence of interference of material between the straight line A and the cylinder means that the straight line A is situated in or above the plane passing through the axis O and the axis of the cylinder. The said means also enable a movement to be conferred on the counter-jaw and, jointly, on the jaw, a movement enabling the cylinder to be extracted from the said support 1 and to be transported, whilst its path, as mentioned above, may be of any type.

Advantageously, the said counter-jaw is in contact with the said cylinder on a surface 13 defining, with respect to the axis of the cylinder, an angle which is sufficient to hold the cylinder whatever the movement of the said counter-jaw. This is the case when the pivoting movement about the axis O causes the said cylinder to travel over half an arc of a circle. By way of example, the said surface forms an angle varying between 90° and 120°.

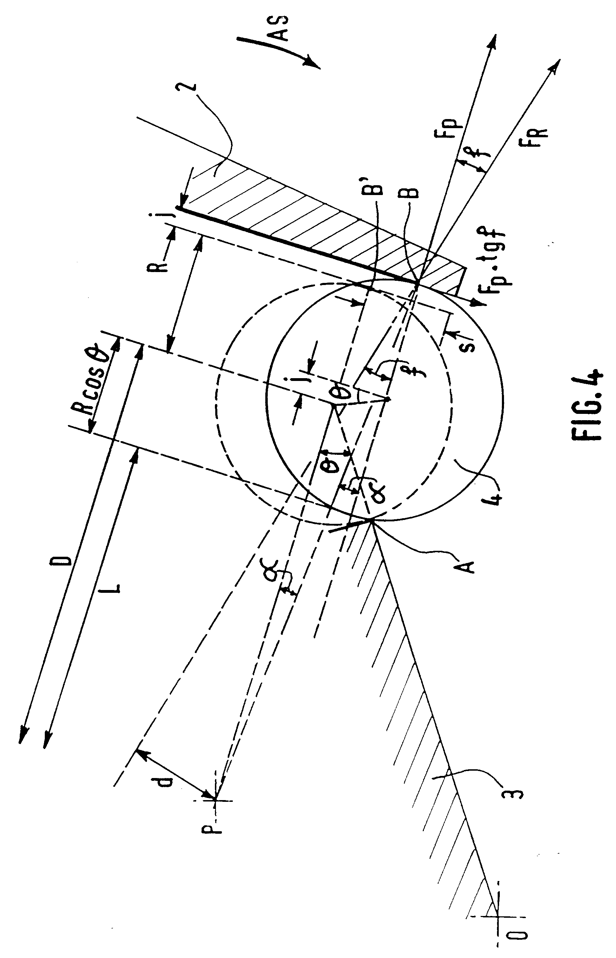

The device also comprises means 8 for conferring on the jaw 2 a pivoting movement about the axis P in order to bring part of the said jaw 2 into contact, to within manufacturing tolerances, with the said cylinder 4 at at least one straight line B (in reality B' when the cylinder rests on the support and then B when the clearance is absorbed by lifting the cylinder; see Fig 4) parallel to the axis of the cylinder, the position of the straight line B being such that, when the jaw pivots about the axis P, there is no interference of material between the said straight line B and the cylinder. This means that the straight line B is, in the example shown in Fig 2, situated in or above the plane passing through the axis P and the axis of the cylinder. As shown in Fig 2, the end of the jaw has an extra length s which will be discussed in more detail below and which makes it possible to absorb the manufacturing tolerances, or clearance j, which will also be discussed in more detail below. In fact, when the cylinder is extracted from the support, the clearance j causes a lowering of the contact straight line B, which makes the said extra length necessary, the distance between the straight lines A and B having, at any time, to be less than the diameter of the cylinder 4. According to a preferred embodiment, the said means 8 consist of a double-acting hydraulic jack. According to other alternatives, the said means consist of a pneumatic jack or a motor.

A double-acting jack can also be used to confer the approach movement on the counter-jaw when the said approach movement is a pivoting movement.

In addition, the straight lines A and B must be disposed so that, when the cylinder is no longer resting on the support 1, the plane which they define cuts the vertical half-plane starting from the axis of the cylinder and oriented downwards, outside the axis of the cylinder. According to an important characteristic of the present invention, the axis P is disposed so that the resultant of the forces applied to the jaw at the said straight line B, when the said cylinder is no longer resting on the support 1, generates a torque acting on the said jaw so as to prevent any movement tending to move apart from each other the said straight lines A and B where the jaw 2 and counter-jaw 3 make contact with the cylinder.

Advantageously, the torque acts on the jaw so as to bring the said straight lines A and B closer together, which causes an automatic self-gripping of the jaw on the cylinder, thus preventing the latter from falling, independently of the hydraulic or pneumatic circuit closing the said jaw 2. This latter point will be explained in more detail below with reference to Fig 4, which shows diagrammatically the device according to the present invention, showing in particular the evaluation of the forces acting on the said jaw. The components common to Figs 2, 3 and 4 bear the same reference numbers.

The condition according to which the distance between the straight lines A and B must always be less than the diameter of the cylinder is represented by the following inequality:

$$D + R - L + j < 2R$$

in which:

R is the radius of the cylinder;
j is the clearance in the relative positioning of the jaw with respect to the counter-jaw;
L is the distance between the axis P and the plane passing through the straight line A and parallel to the plane tangent to the cylinder at the straight line B;
D is the distance between the axis P and the axis of the cylinder when the latter is resting on the support;
whence:

$$j < R - (D - L)$$

where:

$$D - L = R.\cos \Theta$$

where:
$\Theta$ is the angle formed by the planes tangent to the cylinder at the straight lines A and B (or B', which, for a small clearance, is substantially equivalent. This is not the case in Fig 4, in which the clearance j, for reasons of clarity, has intentionally been shown out of proportion), with $\Theta$ c ]0° ; 180°[.

From this is derived:

$$j < R (1 - \cos \Theta) ; \qquad (I)$$

for a given j and R, a minimum angle $\Theta$ is then derived.

The resultant force $F_R$ exerted on the jaw 2 at the straight line B is equal to the sum of the friction force $F_p.\tan f$ and of the component $F_p$ of the force due to the weight of the cylinder, where f is the angle of friction, the component $F_p$ being perpendicular to the plane passing through the straight line B and tangent to the cylinder 4. This resultant $F_R$, in order to generate a torque acting on the jaw 2 so as to prevent any movement tending to move the said straight lines A and B further apart or closer together must be aligned with the plane passing through the axis P and straight line B. On the other hand, to generate a torque acting on the jaw so as to bring the said straight lines A and B closer together, the resultant $F_R$ must be offset angularly with respect to the said plane in the direction shown in Fig 4, so as to cause a movement of the jaw 2 in the direction indicated by the arrow AS.

If M is the moment exerted by the resultant $F_R$ on the axis P, this gives:

$$M = (F_p/\cos f).d$$

where:

$$d = (L + j + R(1 + \cos \Theta)).\sin (f - \alpha)/ \cos \alpha$$

In order for the torque not to act on the jaw in such a way as to move the said straight lines A and B away from each other, it is necessary for:

$$\alpha \le f$$

where:

$\alpha$ is the angle formed by the plane passing through the axis P and the axis of the cylinder when the latter is resting on the support with the plane passing through the axis P and straight line B;
f is the angle of friction of the jaw 2 on the cylinder 4 at the straight line B; if:

$$\tan \alpha \le \tan f$$

where, for a small clearance:

$$\tan \alpha \approx j/(D + R) \tan \Theta$$

this gives:

$$j \le (D + R) \tan f . \tan \Theta \qquad (II)$$

From equation (I), a suitable angle $\Theta$ was determined; the values of j, R and f are known. In general terms, j is less than 0.4 mm, and tan f , also referred to as the coefficient of friction, may be between approximately 0.1 and approximately 0.3. From equation (II), the limit value of D is then derived.

It should be noted that the value of tan f depends on the materials in contact. Higher values of tan f may be obtained by covering the part of the jaw in contact with the cylinder with a material such as neoprene, polyurethane or ferrodo®.

The additional length s necessary to absorb the clearance j must be greater than the ratio between the clearance j and the tangent of the angle $\Theta$. The following table gives the value of the different parameters for a particular embodiment of the device according to the present invention.

| Parameters | Value |
|---|---|
| R (mm) | 80 |
| L (mm) | 480 |
| D (mm) | 557 |
| $\Theta$ (°) | 16 |
| j (mm) | 0.2 |
| tan f | 0.15 |
| s (mm) | 18 |
| $\alpha$ (°) | 0.06 |

Reference is once again made to Fig 2, illustrating a sectional view of the gripping and transporting device according to the present invention.

The operation of such a device is, advantageously, controlled by a computer (not shown), means 9, secured to the jaw, being provided to indicate to the computer whether the said jaw is open or closed. For this purpose, the said means come into contact with a first component 10 for detecting if the jaw is closed and a second component 11 for detecting if the jaw is open, the said detection means being secured to the counter-jaw 3.

The device shown also comprises guide means 12 provided for interacting with the space existing between two adjacent supports on a rack as shown in Fig 1, in order to perfect the approach movement of the said counter-jaw with respect to the shoulders on the reel to be transported.

In the embodiment which has just been discussed in detail, the respective pivot axes of the jaw and counter-jaw are disposed on the same side of the cylinder to be extracted, so that the counter-jaw comes into contact with the cylinder on its face facing the said axes and the jaw comes into contact with the cylinder on its opposite face, by means of a pivoting movement above the said cylinder. It is obvious that any other arrangement of the said jaw and counter-jaw may be envisaged provided that the conditions discussed previously are fulfilled.

Such a device may thus be moved in translation in front of a rack of the type described in Fig 1 and on which are mounted a plurality of reels supported horizontally by their shoulders. The device can then extract and transport a reel situated anywhere on the rack. In addition, such a system does not require tight gripping on the shoulders, thus causing no deformation of the said shoulder.

**Claims**

1. Device for gripping and transporting a cylinder (4) placed horizontally on a support (1), said device comprising:

a) a jaw (2);
b) a counter-jaw (3) on which said jaw (2) is mounted at a pivot axis P parallel to the axis of the cylinder (4) and which is designed to cooperate with said jaw (2) to grip said cylinder (4) and extract it from said support (1) in order to transport it;
c) means for providing the counter-jaw (3) with a rotating approach movement enabling part of said counter-jaw to be brought into contact with the cylinder (4) along at least one straight line A parallel to the axis of the cylinder and located on the same side of the axis of rotation of said counter-jaw with respect to the axis of said cylinder and for providing also the counter-jaw (3) with a movement enabling the cylinder to be extracted from said support (1) and to be transported;
d) means (8) for providing the jaw (2) with a pivoting movement about said pivot axis P in order to bring part of said jaw into contact with said cylinder along at least one straight line B, parallel to the axis of the cylinder (4), the position of said straight line B being such that it is located on the other side of said axis P with respect to the axis of the cylinder and the plane which it defines with the straight line A, when the cylinder is extracted from said support, cuts the vertical half plane starting from the axis of the cylinder and oriented downwards, outside the axis of the cylinder, said jaw and counter-jaw presenting a clearance j in their relative positioning;
said device being characterised in that:

said jaw has an extra length (s) at its end to absorb said clearance; and
the pivot axis P is disposed so that the angle ($\alpha$) formed by the plane passing through the pivot axis P and said axis of the cylinder when the latter is resting, on the support with the plane passing through the pivot axis P and said line B when the cylinder is lifted from the support is less than, or equal to the angle of friction (f) of said jaw on said cylinder at said line B, said angle of friction being defined by its tangent which is the ratio between the force due to the weight of the cylinder and the friction force at line B, thus preventing any movement tending to move away from each other said straight lines A and B where the jaw (2) and counter-jaw (3) make contact with the cylinder (4).

2. Device according to Claim 2, characterised in that the approach movement of the counter-jaw towards the cylinder is a pivoting movement about an axis O, said straight line A being situated in or above the plane passing through the axis O and the axis of the cylinder when the latter is resting on the support.

3. Device according to any one of Claims 1 and 2, characterised in that said counter-jaw is brought into contact with the cylinder (4) on a surface (13) enclosing the cylinder (4) at an angle which is sufficient to allow the cylinder to be transported, whatever the movement of said counter-jaw during transport.

4. Device according to any one of Claims 1 to 3, characterised in that the means (8) enabling a pivoting movement about the axis P to be conferred on the jaw consist of a double-acting jack.

5. Device according to any one of Claims 1 to 4, characterized in that the surface of the jaw (2) in contact with said cylinder is covered with a material such as neoprene, polyurethane or Ferrodo®.

6. Device according to any one of Claims 1 to 5, characterised in that said cylinder is formed by two shoulders on a reel of strip product, the two shoulders being situated at each end of the reel, said jaw (2) and said counter-jaw (3) being divided into two substantially identical parts (2, 2', 3, 3') separated by a distance corresponding approximately to the width of the strip product.

**Patentansprüche**

1. Vorrichtung zum Greifen und Transportieren eines horizontal auf einer Halterung (1) angeordneten Zylinders (4), mit

a) einer Klemmvorrichtung (2),
b) einer Gegenklemmvorrichtung (3), auf der die Klemmvorrichtung (2) um eine Schwenkachse P parallel zur Achse des Zylinders (4) gelagert ist und die mit der Klemmvorrichtung (2) derart zusammenwirkt, daß der Zylinder (4) greifbar und zum Transportieren aus der Halterung (1) herausziehbar ist,
c) Mitteln, die die Gegenklemmvorrichtung (3) derart in eine Dreh- und Annäherungsbewegung versetzen, daß ein Teil der Gegenklemmvorrichtung entlang mindestens einer geraden Linie A mit dem Zylinder (4) in Berührung bringbar ist, wobei die Linie parallel zur Achse des Zylinders verläuft und bezüglich dieser Achse auf derselben Seite der Drehachse der Gegenklemmvorrichtung angeordnet ist, und die die Gegenklemmvorrichtung (3) auch in eine Bewegung versetzen, die bewirkt daß der Zylinder aus der Halterung (1) herausziehbar und transportierbar ist,

d) einem Mittel (8), das die Klemmvorrichtung (2) derart in eine Schwenkbewegung um die Schwenkachse P versetzt, daß ein Teil der Klemmvorrichtung entlang mindestens einer parallel zur Achse des Zylinders (4) verlaufenden geraden Linie B mit dem Zylinder in Berührung bringbar ist, wobei die gerade Linie derart positioniert ist, daß sie auf der anderen Seite der Achse P bezüglich der Achse des Zylinders und der Ebene, die sie mit der geraden Linie A bildet, angeordnet ist, wenn der Zylinder aus der Halterung herausgezogen ist, und daß sie die vertikale halbe Ebene, die ab der Achse des Zylinders beginnt und nach unten gerichtet ist, außerhalb der Achse des Zylinders schneidet, wobei die Klemm- und die Gegenklemmvorrichtung in ihrer relativen Positionierung zueinander einen lichten Abstand j bilden, **dadurch gekennzeichnet**, daß die Klemmvorrichtung an ihrem Ende eine zusätzliche Länge (s) aufweist, um die lichte Höhe zu neutralisieren, und daR die Schwenkachse P derart angeordnet ist, daß der Winkel ($\alpha$), der durch die Ebene gebildet ist, welche durch die Schwenkachse P und die Achse des Zylinders verläuft, wenn dieser auf der Halterung lagert, und durch die Ebene, die durch die Schwenkachse P und die Linie B verläuft, wenn der Zylinder von der Halterung abgehoben ist, kleiner ist als oder gleich groß ist wie der Reibungswinkel (f) der Klemmvorrichtung auf dem Zylinder an der Linie B, wobei der Reibungswinkel durch seine Tangente gebildet ist, die dem Verhältnis von der durch das Gewicht des Zylinders bestimmten Kraft und der Reibungskraft bei Linie B entspricht, wodurch jegliche Bewegung verhindert wird, die zu einem Auseinanderbewegen der geraden Linien A und B dort führt, wo die Klemmvorrichtung (2) und die Gegenklemmvorrichtung (3) in Berührung mit dem Zylinder (4) stehen.

2. Vorrichtung nach Anspruch 1, dadurch gekennzeichnet, daß die Annäherungsbewegung der Gegenklemmvorrichtung zum Zylinder hin eine Schwenkbewegung um eine Achse O ist, wobei die gerade Linie A in oder über der durch die Achse O und die Achse des Zylinders verlaufenden Ebene liegt, wenn der Zylinder auf der Halterung gelagert ist.

3. Vorrichtung nach einem der Ansprüche 1 und 2, dadurch gekennzeichnet, daß die Gegenklemmvorrichtung auf einer den Zylinder (4) umgebenden Fläche (13) mit diesern in einem Winkel in Berührung bringbar ist, der so groß ist, daß der Zylinder unabhängig davon transportierbar ist, wie sich die Gegenklemmvorrichtung während des Transports bewegt.

4. Vorrichtung nach einem der Ansprüche 1 bis 3, dadurch gekennzeichnet, daß das Mittel (8), das bewirkt, daß eine Schwenkbewegung um die Achse P auf die Klemmvorrichtung übertragen wird, aus einem doppelwirkenden Hubzylinder besteht.

5. Vorrichtung nach einem der Ansprüche 1 bis 4, dadurch gekennzeichnet, daß die mit dem Zylinder in Berührung stehende Oberfläche der Klemmvorrichtung (2) mit einem Material wie beispielsweise Neopren, Polyurethan oder Ferrado ® beschichtet ist.

6. Vorrichtung nach einem der Ansprüche 1 bis 5, dadurch gekennzeichnet, daR der Zylinder aus zwei auf einer Spule mit einem streifenförmigen Produkt vorgesehenen Ansätzen gebildet ist, wobei die beiden Ansätze auf jeder Seite der Spule angeordnet sind, und daß die Klemmvorrichtung (2) und die Gegenklemmvorrichtung (3) in zwei im wesentlichen identische Teile (2, 2', 3, 3') geteilt sind, die einen Abstand voneinander haben, der etwa der Breite des streifenförmigen Produkts entspricht.

**Revendications**

1. Dispositif de préhension et de transport d'un cylindre (4) posé horizontalement sur un support (1), ledit dispositif comprenant:

a) une mâchoire (2);

b) une contre-mâchoire (3) sur laquelle est montée ladite mâchoire (2) au niveau d'un axe de pivot P parallèle à l'axe du cylindre (4), et destinée à coopérer avec ladite mâchoire (2) pour enserrer ledit cylindre (4) et l'extraire dudit support (1) en vue de son transport;

c) des moyens pour animer la contre-mâchoire (3) d'un mouvement rotatif d'approche permettant d'amener une partie de ladite contre-mâchoire en contact, avec le cylindre (4) au niveau d'au moins une droite A, parallèle à l'axe du cylindre, et située du même côté que l'axe de rotation de la contre-mâchoire par rapport à l'axe du cylindre, lesdits moyens permettant également d'animer la contre-mâchoire (3) d'un mouvement permettant l'extraction du cylindre dudit support (1) ainsi que son transport;

d) des moyens (8) pour animer la mâchoire (2) d'un mouvement de pivot autour dudit axe de pivot P afin d'amener une partie de ladite mâchoire en contact avec ledit cylindre au niveau d'au moins une droite B, parallèle à l'axe du cylindre (4), la position de ladite droite B étant telle que, elle est située de l'autre côté de l'axe P par rapport à l'axe du cylindre et que le plan qu'elle définit avec la droite A, lorsque le cylindre est extrait dudit support, coupe le demi-plan vertical partant de l'axe du cylindre et orienté vers le bas, en dehors de l'axe du cylindre; un jeu j étant prévu dans le positionnement relatif de la mâchoire par rapport à la contre-mâchoire;

ledit dispositif étant caractérisé en ce que ladite mâchoire présente une surlongueur s à son extrémité pour absorber ledit jeu et en ce que l'axe de pivot P est disposé de telle sorte que l'angle $\alpha$ formé par le plan passant par l'axe de pivot P et ledit axe du cylindre lorsque celui-ci repose sur le support avec le plan passant par l'axe de pivot P et la droite B lorsque le cylindre est soulevé du support est inférieur ou égal à l'angle de frottement (f) de ladite mâchoire sur lèdit cylindre au niveau de ladite droite B, ledit angle de frottement étant défini par sa tangente qui est égale au rapport entre la force due au poids du cylindre et la force de frottement au niveau de la droite B, de manière à empêcher tout mouvement tendant à écarter entre elles lesdites droites A et B de contact de la mâchoire (2) et de la contre-mâchoire (3) sur le cylindre (4).

2. Dispositif selon la revendication 1 caractérisé en ce que le mouvement d'approche de la contre-mâchoire vers le cylindre est un mouvement de pivot autour d'un axe O, ladite droite A étant située dans, ou, au dessus du plan passant par l'axe O et l'axe du cylindre lorsque celui-ci repose sur le support.

3. Dispositif selon l'une quelconque des revendications 1 et 2 caractérisé en ce que ladite contre-mâchoire est amenée au contact du cylindre (4) sur une surface (13) enveloppant le cylindre (4) selon un angle suffisant pour permettre le transport du cylindre, quelque soit le mouvement de ladite contre-mâchoire pendant le transport.

4. Dispositif selon l'une quelconque des revendications 1 à 3 caractérisé en ce que les moyens (8) permettant d'animer la mâchoire d'un mouvement de pivot autour de l'axe P sont constitués d'un vérin à double effet.

5. Dispositif selon l'une quelconque des revendications 1 à 4 caractérisé en ce que la surface de la mâchoire (2) en contact avec ledit cylindre est recouverte d'un matériau tel que du néoprène, du polyuréthane ou du Ferrodo®.

6. Dispositif selon l'une quelconque des revendications 1 à 5 caractérisé en ce que ledit cylindre est constitué des deux épaulements d'une bobine d'un produit en bande, les deux épaulements étant situés de part et d'autre de la bobine, ladite mâchoire (2) et ladite contre-mâchoire (3) étant scindées en deux parties (2, 2', 3, 3') sensiblement identiques et séparées d'une distance correspondant sensiblement à la largeur du produit en bande.

FIG.1

FIG.2

EP 0 607 093 B1

FIG. 3

**FIG.4**